Europäisches Patentamt

European Patent Office

Office européen des brevets

(11) Veröffentlichungsnummer: **0 327 958**
**A1**

## EUROPÄISCHE PATENTANMELDUNG

(21) Anmeldenummer: **89101786.5**

(22) Anmeldetag: **02.02.89**

(51) Int. Cl.⁴: **G01F 23/00 , G01F 25/00**

(30) Priorität: **08.02.88 AT 256/88**

(43) Veröffentlichungstag der Anmeldung:
**16.08.89 Patentblatt 89/33**

(84) Benannte Vertragsstaaten:
**AT BE CH DE ES FR GB GR IT LI LU NL SE**

(71) Anmelder: **WITRONIC ELEKTRONISCHE GERÄTE GESELLSCHAFT M.B.H.**
**Voitgasse 6**
**A-1220 Wien(AT)**

(72) Erfinder: **Spitzer, Martin**
**Nordbahngasse 10**
**A-2253 Weikendorf(AT)**

(74) Vertreter: **Puchberger, Georg, Dipl.-Ing. et al**
**Patentanwälte Dipl.-Ing. Georg Puchberger**
**Dipl.-Ing. Rolf Puchberger Dipl.-Ing. Peter**
**Puchberger Singerstrasse 13 Postfach 55**
**A-1010 Wien(AT)**

(54) **Vorrichtung zum Messen des Inhaltes eines Tanks.**

(57) Bei einer Vorrichtung zum Messen des Inhaltes eines mit Flüssigkeit 2 gefüllten Tanks 3 wird ein Elektromagnet 7 vorgesehen, in dessen Magnetfeld ein Stab 1 gehalten ist, der in die Flüssigkeit 2 eintaucht. Die Lage des Stabes 1 wird durch Veränderung des Magnetfeldes des Elektromagneten 7 gleich gehalten und die Größe des dazu benötigten Stromes ist ein Maß für die Füllhöhe des Tanks.

Die Erfindung betrifft eine Vorrichtung zum Messen des Inhaltes eines mit einer Flüssigkeit gefüllten Tanks.

Die Messung des Inhaltes von größeren Tanks konnte bisher nur händisch durchgeführt werden, was insbesondere dann, wenn die Tanks unterirdisch angeordnet sind, wie dies z.B. bei Tankstellen der Fall ist, schwierig ist, da der Tankwart dann erst in einen Schacht klettern muß und den Tankinhalt mechanisch messen muß.

Es ist Aufgabe der vorliegenden Erfindung, eine Möglichkeit zu finden, den Tankinhalt elektrisch zu messen und dabei aufgrund der elektrischen Messung eine Fernanzeige zu ermöglichen. Erfindungsgemäß wird jetzt vorgeschlagen, an einer Zutrittsöffnung des Tanks einen Elektromagneten vorzusehen, in dessen Magnetfeld ein Stab gehalten ist, der bis nahe zum Boden des Tanks reicht, daß das spezifische Gewicht dieses Stabes größer ist als jenes der Flüssigkeit, daß zur Überwachung der Lage des Stabes ein Positionsgeber vorhanden ist und daß Positionsgeber und die elektrische Speiseleitung des Elektromagneten an eine elektrische Steuerung angeschlossen sind, die die Lage des Stabes an einem vorgegebenen Fixpunkt hält, wobei der dafür an den Magneten abgegebene Strom von einem Strommesser gemessen wird und aus diesem Strommeßwert die Füllhöhe des Tanks und damit dessen Inhalt bestimmt wird.

Der Elektromagnet wird also von einem Strom durchflossen, welcher ausreicht, den Stab anzuheben und in einem dynamischen Gleichgewicht zu halten. Der Effektivwert der elektrischen Leistung, die benötigt wird, um den Stab in diesem dynamischen Gleichgewicht zu halten, entspricht dem Gewicht des Stabes.

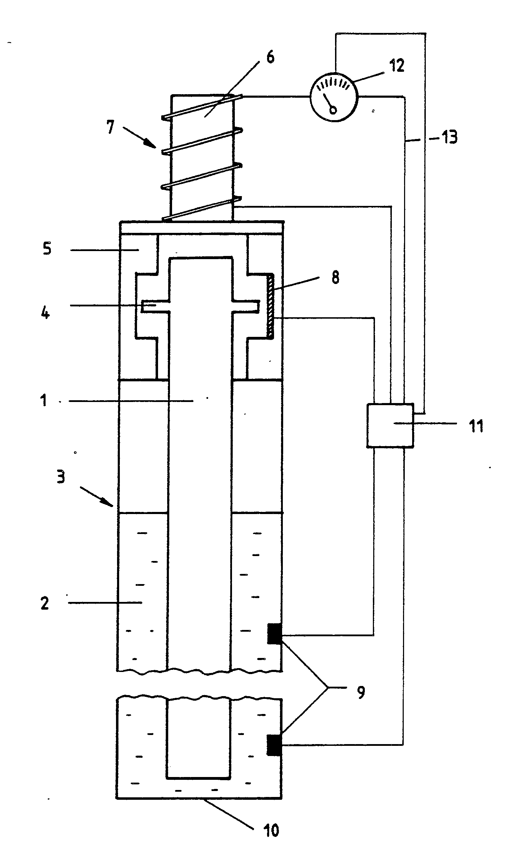

Die Erfindung wird anhand der Zeichnung beschrieben. Die Zeichnung zeigt schematisch die erfindungsgemäße Vorrichtung.

In der Figur ist ein stehender Tank 3 dargestellt, der mit einer Flüssigkeit 2 teilweise gefüllt ist. In diese Flüssigkeit 2 taucht ein Stab 1, der knapp oberhalb des Bodens 10 des Tanks 3 endet. Selbstver ständlich kann bei der Erfindung auch ein liegender Tank verwendet werden.

Die Flüssigkeit 2 im Tank 3 hat ein kleineres spezifisches Gewicht als der Stab 1 und je nach Eintauchtiefe des Stabes 1 ändert sich infolge des Auftriebes durch die Flüssigkeit 2 dessen Gewicht. Am oberen Ende hat der Stab 1 eine Halterung 4, durch die der Stab 1 in einer Ausnehmung einer Befestigungskonstruktion 5 geführt werden kann. Dadurch besteht die Möglichkeit, daß sich der Stab 1 vertikal innerhalb eines gewissen Bereiches bewegen kann, z.B. über eine Länge von 5 mm. In dieser Ausnehmung befindet sich auch ein Positionsgeber 8, der die Lage des Stabes 1 innerhalb des möglichen vertikalen Hubes mißt und in elektronisch auswertbarer Form weitergibt.

Oberhalb des Stabes 1 befindet sich an einer Zutrittsöffnung in den Tank 3 ein Elektromagnet 7 mit einem Kern 6, wobei dieser Kern 6 entweder das Ende des Stabes 1 bildet oder in der Verlängerung des Stabes 1 liegt. Wird durch die Spule des Elektromagneten 7 ein Strom geleitet, so bildet sich ein magnetisches Feld, das ausreicht, den Stab 1 anzuheben. Man bestimmt nun einen beliebigen Punkt innerhalb der Ausnehmung der Befestigungskonstruktion 5 als dynamischen Fixpunkt und diesem dynamischen Fixpunkt entspricht ein gewisser Ausgangswert des Positionsgebers 8. Dieser Wert des Positionsgebers 8 wird einer elektronischen Steuerung 11 zugeführt, wo der Strom, welcher durch den Elektromagneten 7 fließt, derart eingestellt wird, daß der dynamische Fixpunkt stabil gehalten wird; d.h. aber, daß jener Strom, der benötigt wird, um den Stab 1 in der vorgegebenen Lage zu halten, ein genaues Abbild für die Füllhöhe des Tanks 3 ist. Dieser Strom kann durch einen Strommesser 12 in der Zuleitung 13 gemessen werden. Es ist aber selbstverständlich, daß man diesen Meßwert weiter verarbeitet und elektronisch verwertet.

Es is möglich, an einer oder auch an mehreren Stellen im Tank Niveau schalter 9 vorzusehen, wobei die Anzeigen dieser Niveauschalter 9 ebenfalls der elektronischen Schaltung 11 zugeführt werden. Das Volumen an diesen Niveauschaltern 9 muß immer gleich sein und dadurch ist ein selbständiges Justieren und Korrigieren des Systemes möglich. Es ist selbstverständlich, daß man aus der Füllhöhe, wie sie sich durch die Messung des Stromes ergibt, das Volumen errechnen kann; dies kann anhand einer Tabelle erfolgen oder auch durch zugeordnete Werte in einer Datenverarbeitungsanlage, da den einzelnen Werten der Füllhöhe ganz bestimmte Volumswerte zugeordnet sind. Es ist möglich, bei jedem Füllvorgang eine neue Tabelle zu bilden, was so erfolgen kann, daß man beim Befüllen des Tanks 3 laufend die Anzahl der eingefüllten Liter in einen elektronischen Speicher schreibt, wobei die Anzahl der Liter in einer externen Meßeinrichtung angegeben wird. Die Füllhöhe wird dann intern errechnet. Zur Kalibrierung kann das Meßergebnis von einem oder mehreren, fest angeordneten Niveauschaltern überprüft und korrigiert werden.

Mit Hilfe der Erfindung ist es also möglich, ohne Schwierigkeiten den Tankinhalt zu bestimmen und auch eine Fernanzeige zu erreichen.

Im in der Zeichnung dargestellten Beispiel sind der Kern 6 und der Stab 1 voneinander getrennt, was in vielen Fällen einen Vorteil bringt, da der Tank durch einen Deckel verschlossen werden kann. In manchen Fällen jedoch kann der Kern direkt mit dem Stab verbunden sein und der Stab taucht dann mit diesem Kern in die Magnetspule ein und wird entsprechend dem Magnetfeld gehoben und gesenkt. Die Ausbildung des Positionsgebers kann auf verschiedene Weise erfolgen.

Der Positionsgeber kann induktiv, kapazitiv, optisch, mechanisch, oder nach einer beliebigen anderen Wirkungsweise funktionieren.

**Ansprüche**

1. Vorrichtung zum Messen des Inhaltes eines mit Flüssigkeit (2) gefüllten Tanks (3), dadurch gekennzeichnet, daß an einer Zutrittsöffnung des Tanks (3) ein Elektromagnet (7) vorgesehen ist, in dessen Magnetfeld ein Stab (1) gehalten ist, der bis nahe zum Boden (10) des Tanks (3) reicht, daß das spezifische Gewicht dieses Stabes (1) größer ist als jenes der Flüssigkeit (2), daß zur Überwachung der Lage des Stabes (1) ein Positionsgeber (8) vorhanden ist und daß Positionsgeber (8) und die elektrische Speiseleitung (13) des Elektromagneten (7) an eine elektrische Steuerung (11) angeschlossen sind, die die Lage des Stabes (1) an einem vorgegebenen Fixpunkt hält, wobei der dafür an den Magneten (7) abgegebene Strom von einem Strommesser (12) gemessen wird und aus diesem Strommeßwert die Füllhöhe des Tanks und damit dessen Inhalt bestimmt wird.

2. Vorrichtung nach Anspruch 1, dadurch gekennzeichnet, daß das Ende des Stabes (1) als Magnetkern (6) des Magneten (7) ausgebildet ist.

3. Vorrichtung nach Anspruch 1 oder 2, dadurch gekennzeichnet, daß am Stab (1) eine Halterung (4) vorgesehen ist, die innerhalb einer Tragkonstruktion (5) zusammen mit dem Stab (1) beweglich ist.

4. Vorrichtung nach einem der vorhergehenden Ansprüche, dadurch gekennzeichnet, daß in der Ausnehmung der Tragkonstruktion (5) der Positionsgeber (8) vorgesehen ist, der an eine elektronische Einheit (11) zur Steuerung des an den Elektromagneten (7) über die Speiseleitung (13) abgegeben Stromes dient.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-2 911 828  (W.T. KEATING et al.)<br>* Insgesamt *<br>--- | 1,2,4 | G 01 F  23/00<br>G 01 F  25/00 |
| A | US-A-3 527 096  (I.H. COHN et al.)<br>* Spalte 2, Zeilen 41-62; Figuren *<br>--- | 1 | |
| A | BE-A- 689 561  (H.G. KLEMMETSEN)<br>* Figur *<br>----- | 3 | |
| | | | **RECHERCHIERTE SACHGEBIETE (Int. Cl.4)**<br><br>G 01 F<br>G 01 G |

**Der vorliegende Recherchenbericht wurde für alle Patentansprüche erstellt**

| Recherchenort | Abschlußdatum der Recherche | Prüfer |
|---|---|---|
| DEN HAAG | 11-05-1989 | ROSE A.R.P. |